Europäisches Patentamt

European Patent Office

Office européen des brevets

(11) Veröffentlichungsnummer: **0 054 082**
**B1**

(12) **EUROPÄISCHE PATENTSCHRIFT**

(45) Veröffentlichungstag der Patentschrift: **07.08.85**

(21) Anmeldenummer: **80107950.0**

(22) Anmeldetag: **17.12.80**

(51) Int. Cl.⁴: **B 01 D 35/04**, B 01 D 23/14,
C 02 F 9/00, B 01 J 47/00,
B 01 D 27/02

(54) **Vorrichtung zur Wasserreinigung.**

(43) Veröffentlichungstag der Anmeldung:
**23.06.82 Patentblatt 82/25**

(45) Bekanntmachung des Hinweises auf die
Patenterteilung:
**07.08.85 Patentblatt 85/32**

(84) Benannte Vertragsstaaten:
**AT BE CH DE FR GB IT LI LU NL SE**

(56) Entgegenhaltungen:
**DE-A-1 157 198**
**US-A-2 037 332**
**US-A-2 773 601**
**US-A-3 374 895**
**US-A-4 212 743**
**US-A-4 219 415**

(73) Patentinhaber: **Brita Wasserfilter G.M.b.H.**
**Waldstrasse 4**
**D-6204 Taunusstein 4 (DE)**

(72) Erfinder: **Hankammer, Heinz**
**Waldstrasse 4**
**D-6204 Taunusstein 4 (DE)**

(74) Vertreter: **Weber, Dieter, Dr. et al**
**Dr. Dieter Weber und Klaus Seiffert**
**Patentanwälte Gustav-Freytag-Strasse 25**
**Postfach 6145**
**D-6200 Wiesbaden 1 (DE)**

Courier Press, Leamington Spa, England.

**Beschreibung**

Die Erfindung betrifft eine Vorrichtung zur Wassereinigung mit einem mit Reinigungsmittel füllbaren Behälter, dessen Mantel mit einem ebenen Deckel und einem ebenen Boden versehen ist und der eine befestigte gekrümmte Trennwand zur Bildung eines, von Sieben am Anfang und Ende begrenzten länglichen Bettes für das Reinigungsmittel aufweist.

Aus dem deutschen Gebrauchsmuster 73 46 108 ist zwar bereits ein Filterbehälter für die Wassereinigung mit einer Hülse und einem an letzterer angeordneten Trichter zum Aufsetzen auf Gefäße bekannt. Diese Vorrichtung ist aber zweiteilig, wobei der Trichter dichtend mit der etwa zylinderförmigen Hülse über einen Flansch verbunden ist. Der Außendurchmesser der Hülse ist erheblich kleiner als derjenige des Trichters. Die Hülse weist sowohl als Boden unten als auch oben ein eingesetztes Sieb auf, in dem Raum dazwischen ist das Reinigungsmittel aufgenommen.

Bei der Benutzung dieser bekannten Reinigungsvorrichtung, zumeist im Haushalt, wird frisches Wasser aus der Wasserleitung oben in den Trichter eingefüllt und läuft infolge seines Gewichtes, d.h. mit dem Druck der Wassersäule, durch das Bette des Filtermaterials, wobei die Betthöhe durch die Länge der Hülse vorgegeben ist. Da nur das Gewicht des zu reinigenden Wassers selbst zur Erzeugung des durchlaufenden Druckes vorgegeben ist, ist die Strömungsgeschwindigkeit der Flüssigkeit an dem Füllmaterial vorbei ausreichend gering, so daß eine gute Verweilzeit und damit eine durchgreifende Reinigung des Wassers erfolgt, bis das gereinigte Wasser die Hülse unten durch das Sieb verläßt.

Wollte man die Durchflußmenge steigern oder die Reinigungsqualität verbessern, dann müßte man eine längere Kontaktzeit zwischen der Füllmasse und der zu reinigenden Flüssigkeit vorgeben. Bei größerer Strömungsgeschwindigkeit verringert sich aber die Kontaktzeit, es sei denn, man vergrößert die Betthöhe. Dies bedeutet im bekannten Falle eine Verlängerung der Hülse, und normalerweise sind Geräte mit einer zu langen Hülse unerwünscht. Insbesondere im Haushalt und in Restaurationsbetrieben wird die Wassereinigung als notwendiges Übel angesehen, und man ist nur zögernd bereit, raumaufwendige Geräte hierfür vorzusehen.

Eine Vorrichtung der eingangs genannten Art ist aus der US—A—2 037 332 bekannt. Dort ist zwar schon eine gegenüber der vorstehend beschriebenen Hülse vergrößert ausgebildete Betthöhe vorgesehen, die Gesamtgestaltung kann aber keineswegs als optimal bezeichnet werden. Abgesehen von zwei auf konzentrischen Kreisen angeordneten Trennwänden verbleiben in dem Bereich des Einlaufes und daneben im Bereich des Auslaufes, die sich beide vom Deckel bis zum Boden erstrecken, leere Räume in dem Gehäuse. Dieses für die Wassereinigung unausgenutzte Volumen mag bei der bekannten Vorrichtung keine Rolle spielen, weil das Gehäuse verhältnismäßig groß un hoch ausgebildet ist. In den modernen Küchen der Haushalte und Gastwirtschaftsbetriebe steht heute aber nur noch ein geringes Raumangebot zur Verfügang, so daß das Bedürfnis nach einer besseren Raumausnutzung und Schaffung einer längeren Betthöhe dringender geworden ist.

Der Erfindung liegt daher die Aufgabe zugrunde, eine Wassereinigungsvorrichtung der in der US—A—2 037 332 beschriebenen Art dahingehend zu verbessern, daß ohne übermäßigen Raumaufwand eine noch größere Betthöhe erreicht wird, so daß derartige Gerätschaften gegebenenfalls auch im Haushalt, in Restaurationsbetrieben oder auch in der industriellen Praxis Verwendung finden können.

Diese Aufgabe wird erfindungsgemäß dadurch gelöst, daß die Trennwand spiralförmig angeordnet ist, die Siebe in der Ebene des Bodens und des Deckels befestigt sind und daß der Einlauf in der Mitte des Deckels und der Auslauf am Umfang des Bodens angeordnet sind. Hierdurch werden im Inneren des Behälters entsprechend spiralförmige Leitungen vorgesehen, so daß sich auf engem Raum eine lange Betthöhe für eine Filtermasse dann ergibt, wenn zwischen die Trennwände, nämlich in die sich dadurch ergebenden Leitungen, die Füllmasse zur Reinigung des Wassers eingefüllt wird, vorzugsweise Aktivkohle oder Ionenaustauscher oder ein Gemisch von diesen. Ohne daß das Gerät zu unhandlich wird, kann das zu reinigende Wasser also auf einem sehr langen Weg vom Einlauf bis zum Auslauf mit der Füllmasse in Berührung gehalten werden. Damit ist entweder eine außerordentlich hohe Reinigungsqualität erreicht, oder man kann bei sonst sehr guter Reinigungsqualität die Strömungsgeschwindigkeit erhöhen. Die Spiralform ist übrigens nicht nur auf die exakt geometrisch ideale Spirale beschränkt, vielmehr kann die Spirale auch etwa oval, länglich oder rechteckig mit abgerundeten Ecken geführt sein, wobei der Behälter von runder bis eckiger Form ausgestaltet sein kann.

Die erfindungsgemäße Vorrichtung erlaubt eine effektive Reinigung insbesondere Demineralisierung, und es ist auch eine Feinstfiltration und gegebenenfalls gesondert oder kombiniert eine Entkarbonisierung des Wassers möglich. Obwohl man die bessere Qualität des gefilterten bzw. demineralisierten Wassers durch die große Höhe des Filterbettes erhält, ist nicht eine sehr lange Säule erforderlich, die viel Platz benötigt und schlecht unterzubringen ist. Vielmehr ist das Gerät gemäß der Erfindung handlich und praktisch einsetzbar und kann an einen Wasserhahn angebracht werden, ohne daß ein großer Raumbedarf gegeben ist. Dabei hat man eine gute Reinigungsqualität, welche durch die Anordnung der Siebe bezüglich der Höhe des zylindermantelförmigen Gehäuses und auch an dessen Umfang begünstigt wird, insbesondere durch ihr kombinatorisch-funktionelles Zusammenwirken mit der Anordnung der spiralförmigen Trennwand.

Der Behälter der erfindungsgemäßen Reinigungsvorrichtung kann bevorzugt aus Kunststoff hergestellt sein, wobei der Außenmantel im wesentlichen zylinderförmig ist. Er weicht insofern bei der hier beschriebenen Ausführungsform von der exakten Zylindergestalt ab, als die Spirale im Schnitt des Behälters gesehen einen schneckenförmig sich nach außen erweiternden Kanal vorgibt, der an seiner Stelle abbricht, so daß die Außenwandungen hier einen Übergang in radialer, Richtung aufweisen müssen. Insbesondere bei der Herstellung eines solchen Behälters aus Kunststoff ergibt sich bei dieser Ausführungsform eine einfache Herstellung allein schon aus der Spritzform. Mit dieser werden ein Boden oder ein Deckel mit angegossenen Stegen für die Trennwände gespritzt, der Behälter kann dann mit der Filtermasse gefüllt und durch Aufsetzen und Befestigen des Deckels denach Verschlossen werden. Ein solcher Behälter ist auch in Massenfabrikation preiswert und zuverlässig funktionssicher herstellbar. Vorzugsweise ist die Dicke der Trennwände bzw. der Stege hierbei kleiner als die des zylinderförmigen Mantels und/oder Deckels und Bodens. Durch die Vielzahl nebeneinander angeordneter Trennwände sind dennoch Deckel und Boden in festem Abstand zueinander, und der gesamte Behälter stellt eine kompakte und stabile Einheit dar.

Zweckmäßig ist es gemäß der Erfindung ferner, wenn der Einlauf in Gestalt einer Schnellkupplung mit Druckreduzierdüse vorgesehen ist. Hierdurch kann die erfindungsgemäße Vorrichtung in praktischer Weise mit einem Griff an einen mit einer entsprechenden Kupplung versehenen Wasserhahn angesteckt werden und ist somit gebrauchsfertig. Die Druckreduzierdüse sorgt im laufenden Betrieb beim Durchfließen des zu reinigenden Wassers für einen Druckabfall von Netzdruck zum Betriebsdruck in dem mit der Füllmasse gefüllten Behälter, so daß mit Sicherheit eine Beschädigung oder gar eine Explosion des Behälters auch dann ausgeschaltet ist, wenn er aus Kunststoffwänden besteht. Bei dem im Versorgungsnetz üblichen Wasserdruck handelt es sich um einen Druck bis zu 6 bar. Die Betthöhe ergibt sich selbstverständlich durch die Länge der mit Filtermaterial gefüllten Bahn oder Leitung, durch welche das zu reinigende Wasser durchgeführt werden muß, also vom Wassereintritt bis zum Austritt oder mit anderen Worten von einem Sie zum anderen.

Ein weiterer Vortiel der Druckreduzierdüse ist die Vergleichmäßigung des Druckaufbaus beim Einfüllen des Wassers, d.h. bei der Inbetriebnahme der Vorrichtung, wenn nach dem Anstecken und Befestigen der Vorrichtung mit Hilfe der Schnellkupplung der Wasserhahn geöffnet wird und der im Versorgungsnetz übliche Wasserdruck nun am Einlauf ansteht. Es ergibt sich auch der weitere Vorteil beim Reduzieren des Wassernetzdruckes, daß die Strömungsgeschwindigkeit reduziert wird und somit die Kontaktzeit des Wassers mit der Füllung größer wird.

Bei vorteilhafter weiterer Ausgestaltung der Erfindung ist die Druckreduzierdüse mittig im Abstand über dem oberen Sieb im Deckel innerhalb der Schnellkupplung angebracht, und der Auslauf am äußeren Ende der Spirale ist in Gestalt eines kegelstumpfförmigen Rohres im Bereich des unteren Siebes am Boden befestigt. Damit kann ein Wasserstrahl für das austretende, gereinigte Wasser erzeugt werden, so daß dieses nicht mit Nachteil etwa am Boden außen entlangläuft und an unerwünschten Stellen abtropft.

Während der Auslauf vorzugsweise am äußeren Ende der Spiral angeordnet ist, befindet sich der Einlauf in Gestalt der Schnellkupplung mehr in zentralen Bereich. Die Schnellkupplung bildet nämlich, wie oben schon erwähnt, die Befestigung der Vorrichtung an der Kupplung an einem Wasserhahn, und die gesamte Anordnung ist besser ausgewogen, d.h. ihr Gewicht ist am Wasserhahn gleichmäßiger verteilt, wenn sich die Schnellkupplung mit Reduzierdüse und oberem Sieb mittig in der Anordnung befindet.

Durch den Abstand zwischen dem oberen Sieb und der Druckreduzierdüse wird innerhalb des Gehäuses der Schnellkupplung ein Raum geschaffen, der eine gute Wasserverteilung erlaubt. Da außerdem das obere Sieb fest im Deckel innerhalb der Schnellkupplung, d.h. in einem mechanisch starken, festen Teil angeordnet ist, kann mit Vorteil ein sich etwa aufbauender Wasserdruck ohne Bruch gehalten werden. Ein solcher Wasserdruck, z.B. der im Versorungsnetz übliche Druck, kann sich im Gehäuse der Schnellkupplung dadurch aufbauen, daß Schmutz mit dem Frischwasser zugeführt wird sich in der Schnellkupplung absetzt. Durch deren feste Ausbildung wird der sich hinter der Verstopfungsstelle aufbauende erhöhte Druck dann ohne weiteres gehalten, und es tritt keine Leckage auf. Ferner wird im Falle einer Betriebsstörung mit Rückstau durch die Anordnung des oberen Siebes im Deckel die Filtermasse mit Sicherheit in dem spiralförmigen Behälter gehalten und nicht etwa in die Schnellkupplung hineingedrückt oder hineingespült.

Zweckmäßig ist es gamäß der Erfindung ferner, wenn mindestens im Bereich der Spiralmitte ein verdicktes Stützteil in Form eines strömungstechnisch güngstigen Wulstes vorgesehen ist. Wenn die oben beschriebene bevorzugte Ausführungsform mit der mehr oder weniger echten Spiralform verwendet wird, kann bereits die Anordnung des Stützteils nur im Bereich des Zentrums des Behälter ausreichen Ein solcher stützteil, z.B. in Form eines Kunststoffwulstes, erhöht erheblich die mechanische Festigkeit der erfindungsgemäßen Vorrichtung. Z.B. ist das Stützteil vorzugsweise am Deckel und am Boden befestigt. Es verbindet dann diese beiden Wände und gibt dem gesamten Behälter eine sehr stabile Form. Bei anderen Ausführungsformen mit von der idealen Spirale abweichenden Ausgestaltung der Strömungswege können derartige verdickte Stützteile auch außermittig und/oder an anderen Stellen angebracht sein. Vorzugsweise werden sie stets an den Stellen der höchsten mechanischen Beanspruchung befestigt.

Die vorrichtung gemäß der Erfindung kann wie schon gesagt in verschiedenen Bereichen angewendet werden, wie z.B. Haushalt, Gastronomie und Industrie. Während im letzten Falle die gesamte Vorrichtung als Einwegartikel nach dem Verbrauch der Filtermasse weggeworfen wird, kann der spiralförmig aufgebaute, etwa die Gestalt eines flachen Zylinders aufweisende Behälter wie eine Art Kassette wie beim Tonband oder Videoband in ein Komfortgerät, z.B. ein verchromtes Filtergerät, das am Wasserhahn befestigt ist, einschiebbar angeordnet sein. In diesem Komfortgerät stellt der spiralförmige bzw. zylinderförmige Behälter lediglich einen Einsatz dar, der dann, wenn die Füllmasse erschöpft ist, durch einen neuen ersetzt und weggeworfen wird. Der Zustand, wann die Füllmasse erschöpft ist, wird entweder durch einen Farbindikator oder z.B. durch den Geschmack des am Auslauf austretenden Wassers geprüft. In dem Komfortgerät, in dem verchromten Filtergerät also, in welchem die Reinigungsvorrichtung wie ein Einsatz oder eine Kassette herausnehmbar und austauschbar eingesetzt ist kann z.B. ein Zwei-Wege-Ventil vorhanden sein, welches wahlweise ungefiltertes Wasser für einfachere Verwendungszwecke aus dem Wasserhahn direkt nach unten in ein Becken leitet, und andererseits gefiltertes Wasser für höhere Ansprüche im anderen Falle nach dem Umstellen aus dem Gerät freigibt. In diesem Falle kann die Form der Kassette vorzugsweise auch recteckig sein, wobei die Ganganordnung innen mehr oder weniger spiralförmig ist, dem Prinzip nach aber der Strömungsweg spiralähnlich ist. d.h. das zu reinigende Wasser von innen nach außen strömt.

Weitere Vorteile, Merkmale und Anwendungsmöglichkeiten ergeben sich aus der folgenden Beschreibung im Zusammenhang mit den Zeichnungen. Es zeigen:

Figur 1 die Querschnittsansicht einer Wassereinigungsvorrichtung bzw. des etwa zylinderförmigen Behälters im Schnitt, bei welchem die Strömungsbahn sprialförmig von innen nach außen geführt, und

Figur 2 eine Querschnittsansicht der Vorrichtung nach Figur 1 mit einer gestrichelten Schnittlinie I—I, welche die Darstellung der Figur 1 ergibt.

Die Wasserreinigungsvorrichtung weist den allgemein mit 1 bezeichneten Behälter aus Kunststoff auf, der einen etwa zylinderförmigen Mantel 2, einen Deckel 3 und einen Boden 4 hat. Zwischen Deckel und Boden befinden sich spiralförmig angeordnete Trenwände 5. Die Spritzgußform zur Herstellung dieses Behälters 1 ist so ausgestaltet, daß mit ihr der Boden 4 mit dem zylinderförmigen Mantel 2 und den stegartig hochstehenden Trennwänden 5 angeformt werden Beim Herstellungsprozeß wird das untere Sieb 6 entweder sogleich mit angeformt, oder es wird nachträglich eingesetzt und angeschweißt. Außerdem ist ein verdicktes Stützteil 8 im Bereich der Spiralmitte vorgesehen, das vorzugsweise ebenfalls am Boden 4 angespritzt ist. Bei der Herstellung wird die nicht dargestellte Füllmasse dann in die einzelnen spiralförmigen Kanäle eingefüllt, wonach der Deckel 3 aufgesetzt und z.B. durch Schweißen an dem zylinderförmigen Mantel 2 und den Trenwänden 5 befestigt wird. Das obere Sieb 7 ist vorzugsweise zuvor am Deckel angespritzt Ferner ist eine Schnellkupplung 9 über dem oberen Sieb 7 am Deckel 3 angeformt. Der Einlauf .erfolgt über diese am Deckel 3 angespritzte oder angeschweißte Schnellkupplung 9.

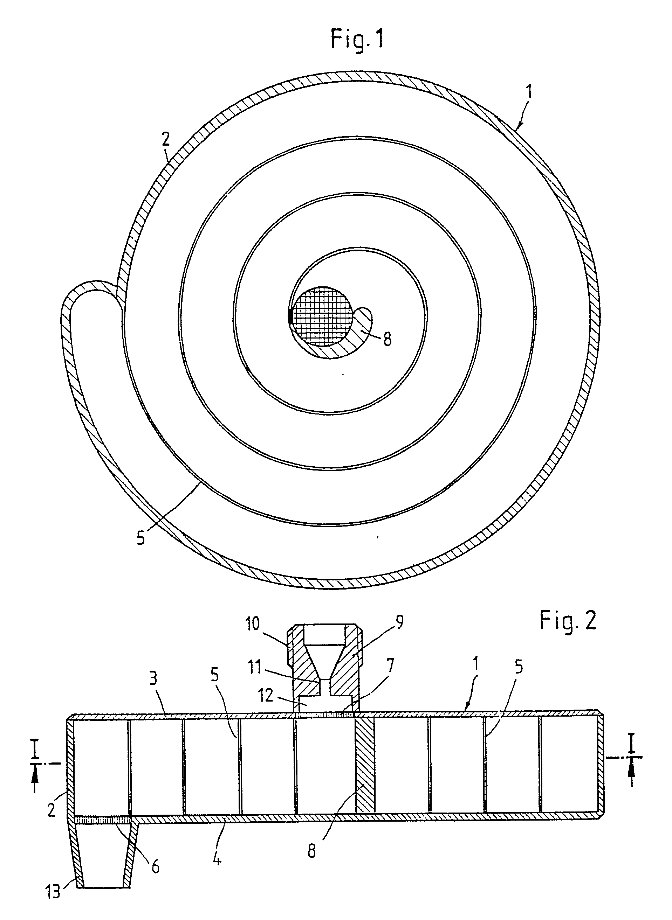

Die Schnellkupplung 9 ist gemäß Darstellung in den Figuren mittig am Deckel 3 angeordnet und in Figur 2 mit einem Wulst 10 gezeigt, über welchen eine Muffe am Wasserhahn greift, um eine feste Stützverbindung zwischen dem stationären Wasserhahn und dem Behälter 1 nach dem Ankuppeln zu schaffen. Die Schnellkupplung 9 weist eine Druckreduzierdüse 11 auf, die im Abstand über dem oberen Sieb 7 so in der Schnellkupplung 9 angeordnet ist, daß sich zwischen Sieb 7 und Düse 11 ein Raum 12 ergibt. In diesem können sich im Falle von hereingeschwemmten Verschmutzungen mit dem Frischwasser Verunreinigungen ansammeln die am Eintritt in die Füllmasse gehindert werden, welche sich in dem spiralförmigen Strömungsweg befindet. Man erkennt deutlich, daß jede Trennwand 5 zwei nebeneinander angeordnete Bahnen voneinander trennt bzw. die Innenseite der einen und gleichzeitig die Außenseite der anderen Strömungsbahn darstellt.

Der Auslauf am äußeren Ende der Spirale hat die Gestalt eines kegelstumpfförmigen Rohres 13, das am Boden 4 angeformt ist und das untere Sieb 6 in der Höhe des Bodens 4 aufnimmt.

Mit einer solchen Reinigungsvorrichtung erreicht man bei einem praktischen Ausführungsbeispiel einen Durchfluß von 60 l pro Std., obwohl bei einer anderen Ausführungsform auch schon ein Durchfluß von 100 l Wasser pro Stunde erreicht wurde.

## Patentansprüche

1. Vorrichtung zur Wasserreinigung mit einem mit Reinigungsmittel füllbaren Behälter (1), dessen Mantel mit einem ebenen Deckel und einem ebenen Boden versehen ist und der eine befestigte gekrümmte Trennwand (5) zur Bildung eines, von Sieben (6, 7) am Anfang und Ende begrenzten länglichen Bettes für das Reinigungsmittel aufweist, dadurch gekennzeichnet, daß die Trennwand (5) spiralförmig angeordnet ist, die Siebe (6, 7) in der Ebene des Bodens (4) und des Deckels (3) befestigt sind und daß der Einlauf in der Mitte des Deckels (3) und der Auslauf am Umfang des Bodens (4) angeordnet sind.

2. Vorrichtung nach Anspruch 1, dadurch gekennzeichnet, daß der Einlauf in Gestalt einer Schnellkupplung (9) mit Druckreduzierdüse (11) vorgesehen ist.

3. Vorrichtung nach Anspruch 1 oder 2, dadurch gekennzeichnet, daß die Druckreduzierdüse (11) mittig im Abstand über dem oberen Sieb (7) im Deckel (3) innerhalb der Schnellkupplung (9) angebracht ist und daß der Auslauf am äußeren Ende der Spirale in Gestalt eines kegelstumpfförmigen Rohres (13) im Bereich des unteren Siebes (6) am Boden (4) befestigt ist.

4. Vorrichtung nach einem der Ansprüche 1 bis 3, dadurch gekennzeichnet, daß mindestens im Bereich der Spiralmitte ein verdicktes Stützteil (8) in Form eines strömungstechnisch günstigen Wulstes vorgesehen ist.

**Revendications**

1. Appareil de purification d'eau comportant un récipient (1) pouvant être rempli d'agent de purification et dont la paroi latérale est pourvue d'un couvercle et d'un fond plans et qui présente une cloison courbe (5) fixe destinée à former pour l'agent de purification un lit allongé limité au début et à la fin par des tamis (6, 7) caractérisé par le fait que la cloison (5) est en spirale, les tamis (6, 7) sont fixés l'un dans le plan du fond (4), et l'autre dans le plan du couvercle (3), et l'entrée est placée au milieu du couvercle (3) et la sortie placée à la périphérie du fond (4).

2. Appareil selon la revendication 1, caractérisé par le fait que l'entrée est pourvue d'un raccord rapide (9) à ajutage de réduction de pression (11).

3. Appareil selon l'une des revendications 1 et 2, caractérisé par le fait que l'ajutage de réduction de pression (11) est placé au milieu dans le raccord rapide (9) à une certaine distance au-dessus du tamis supérieur (7) prévu dans le couvercle (3), et la sortie, située à l'extrémité extérieure de la spirale et constituée d'une tubulure tronconique (13), est fixée au fond (4) dans la zone du tamis inférieur (6).

4. Appareil selon l'une des revendications 1 à 3, caractérisé par le fait qu'au moins dans la zone du milieu de la spirale est prévu un élément de soutien épaissi (8) formé d'un bourrelet de forme favorable du point de vue hydraulique.

**Claims**

1. Water purification apparatus comprising a container (1) which can be filled with purification agent and whose casing is provided with a flat cover and a flat bottom and which has a fixed curved partitioning wall (5) for forming an elongate bed for the purification agent, said bed being delimited by sieves (6, 7) at the beginning and the end, characterised in that the partitioning wall (5) is arranged in a spiral, the sieves (6, 7) are fixed in the plane of the bottom (4) and the cover (3), and that the intake is arranged in the middle of the cover (3) and the outlet is arranged at the periphery of the bottom (4).

2. Apparatus according to claim 1 characterised in that the intake is provided in the form of a quick-action coupling (9) with pressure reducing nozzle (11).

3. Apparatus according to claim 1 or claim 2 characterised in that the pressure reducing nozzle (11) is disposed centrally at a spacing above the upper sieve (7) in the cover (3) within the quick-action coupling (9) and that the outlet is fixed at the outer end of the spiral in the form of a frustoconical tube (13) in the region of the lower sieve (6) at the bottom (4).

4. Apparatus according to one of claims 1 to 3 characterised in that a thickened support portion (8) in the form of a bulge portion which is advantageous in regard to flow configuration is provided at least in the region of the centre of the spiral.

Fig.1

Fig.2